# EUROPEAN PATENT SPECIFICATION

(11) **EP 2 258 570 B1**
(45) Date of publication and mention of the grant of the patent: **09.05.2012**
(21) Application number: 10164808.7
(22) Date of filing: 03.06.2010
(51) Int. Cl.: F16F 9/44, B60G 17/0185, B60G 21/067, F16F 5/00

(54) **Method of controlling pressurized operating fluid feed to a hydraulic suspension cylinder, and valve assembly implementing such a method**
Verfahren zur Steuerung des Fluiddruckes eines hydraulischen Federungszylinders und die Ventilanordnung zur Umsetzung des Verfahrens
Procédé de contrôle de l'introduction d'un fluide opérationnel sous pression dans un cylindre de suspension hydraulique et ensemble de valve appliquant ledit procédé

(30) Priority: 03.06.2009 IT TO20090417
(43) Date of publication of application: 08.12.2010
(73) Proprietor: Industrie Cometto S.p.A., 12011 Borgo San Dalmazzo (IT)
(72) Inventor: Ghinamo, Paolo, 12012, BOVES (IT); Terzuolo, Pierluigi, 12100, CUNEO (IT)
(74) Representative: Jorio, Paolo

(56) References cited:
- EP-A2- 0 443 613
- US-A- 5 085 460
- US-A1- 2005 225 048
- US-B1- 6 389 341

## Description

The present invention relates to a method of controlling pressurized operating fluid feed to a hydraulic suspension cylinder.

Tyred-wheel transport vehicles include trailers pulled by a tractor and comprising a load-carrying frame; and a number of wheels, each connected to the frame by a respective suspension comprising a hydraulic cylinder. Depending on the type of load transported, the cylinders are normally divided into groups or zones, and the cylinders in each group of zone are fed and controlled by a dedicated hydraulic circuit, in which the hydraulic cylinders are connected in parallel by respective hoses to a pressurized fluid feed circuit. The hoses are delicate parts of the circuit and those which, for various reasons, normally fail most frequently. Failure of any one of the hoses inevitably drains all the hydraulic cylinders in the group, thus immediately disabling the transmissions.

To eliminate this drawback, each cylinder is provided with a cutoff valve, otherwise known as a "parachute valve", which, in the event of a hose failing, prevents fluid leakage.

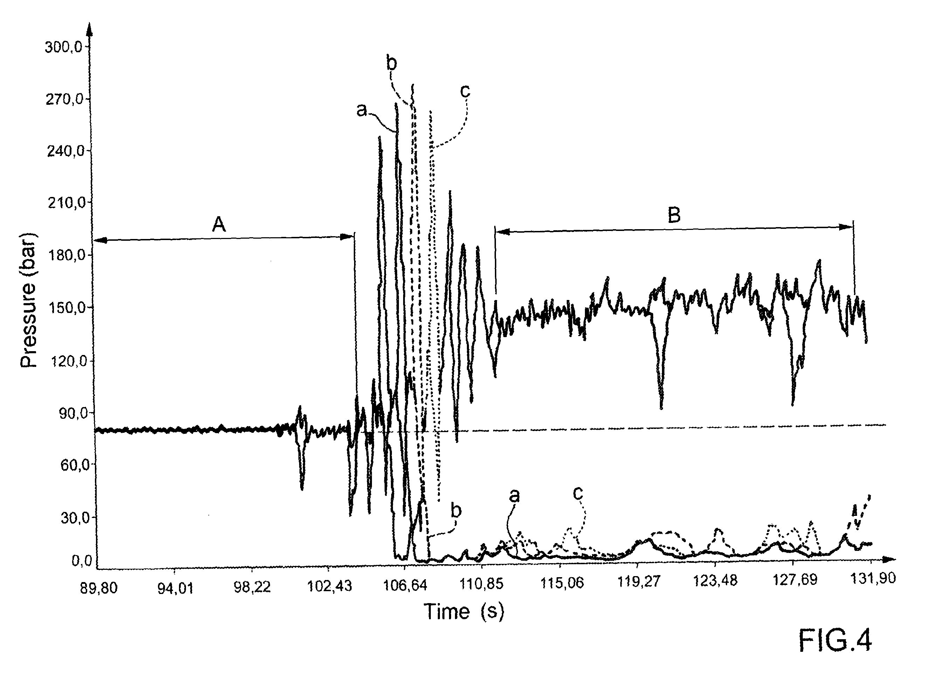

Various types of cutoff valves are currently employed, and in particular valves which immediately cut off fluid flow when the flow through them exceeds a threshold value set prior to connecting the valve to the cylinder such valves are disclosed for example in US-B1-6,389,341. Though efficient, valves of this sort pose serious problems in uneven road conditions, such as holes and/or ditches, or when driving over traffic dissuaders, such as speed bumps. In which case, the cylinders inject fluid sharply into the circuit, thus causing an abrupt increase in flow which almost immediately exceeds the valve threshold value, with the result that the valves close in succession, cutting off the respective cylinders. Abrupt closure of one or more cutoff valves in succession causes a sharp increase in circuit pressure and so immediately overloads the other suspensions, as shown in Figure 4, in which curves a, b, and c show the pressures of three of the suspensions excluded by respective cutoff valves. As can be seen, the load on the other suspensions increases 100%.

The problem is partly solved using so-called "delayed" parachute valves of the kind disclosed in EP-A-0 443 613. These comprise a timing chamber which is initially filled with fluid, is bounded at one end by the valve shutter, and at the other end has a calibrated choke, through which fluid flows out, when the set threshold flow is exceeded, thus delaying closure of the valve. The volume of the chamber is determined at the design stage to obtain a given delay on the basis of estimated fluid flow through the valve.

Though an improvement on the previous type, delay valves still fail to enable trailers to travel along any type of road surface, even the most uneven, or over dissuaders or bumps of all heights at any speed.

This is mainly due to the fact that, the further the wheel moves to and from the frame, and the faster the wheel moves towards the frame, the greater the instantaneous flow through the valves is. So that, in most situations, flow exceeds and may even be as much as five times the estimated design flow, and the valve kicks in. Because the pressure in the circuit, however, has also increased, the actual delay time is much less than the estimated design time, so that one or more cylinders are still cut off from the circuit, thus resulting in the same overload situation as with nondelayed valves.

For this reason, trailers are still designed and manufactured with an eye to the type of routes to be travelled.

It is an object of the present invention to provide a method of controlling pressurized operating fluid feed to a hydraulic suspension cylinder, designed to provide a straightforward, low-cost solution to the above drawbacks.

According to the present invention, there is provided a method of controlling a hydraulic suspension comprising at least one hydraulic cylinder connected to a feed pipe, the method comprising the steps of feeding a flow of operating fluid to said hydraulic cylinder through a cutoff valve assembly; and setting said valve assembly so as to activate said valve assembly at a first instant, in which flow to the hydraulic cylinder exceeds a set or threshold flow of said valve assembly, and so that the valve assembly reaches a closed position or a position cutting off said hydraulic cylinder from said feed pipe at a second instant delayed with respect to said first instant; the method being characterized by comprising the further step of adjusting the time between said first and second instant by acting from the outside and/or during operation of said valve assembly as a function of stress on said hydraulic suspension.

The present invention also relates to a valve assembly for controlling pressurized operating fluid feed to a hydraulic suspension cylinder.

According to the present invention, there is provided a cutoff valve assembly for controlling a hydraulic suspension comprising a hydraulic cylinder connected to a feed pipe for feeding a pressurized operating fluid, the valve assembly being interposed between the feed pipe and said hydraulic cylinder to cut off operating fluid flow to said hydraulic cylinder, and comprising setting means for setting a set or threshold flow, and for defining a first instant in which to activate said valve assembly and in which flow to the hydraulic cylinder exceeds said set flow; and hydraulic timing means for moving said valve assembly into a closed position or a position cutting said hydraulic cylinder off from said feed pipe at a second instant delayed with respect to said first instant; the valve assembly being characterized in that said hydraulic timing means comprise adjusting means that can be operated from the outside and/or during operation of the valve assembly to adjust the time between said first and second instant as a function of stress on said hydraulic suspension.

A non-limiting embodiment of the invention will be described by way of example with reference to the accompanying drawings, in which:
Figure 1 shows a schematic, with parts removed for clarity, of a tyred-wheel trailer equipped with a number of cutoff valve assemblies in accordance with the teachings of the present invention;
Figure 2 shows a larger-scale side view of a detail in Figure 1;
Figure 3 shows a larger-scale section of a preferred embodiment of a detail in Figures 1 and 2;
Figure 4 shows a pressure-time graph of a set of known cutoff valve assemblies;
Figures 5a-5g show flow-time graphs of the Figure 1 and 2 cutoff valve assembly in different operating configurations;
Figure 6 shows a graph similar to the one in Figure 4;
Figure 7 shows a variation of a detail in Figure 3.

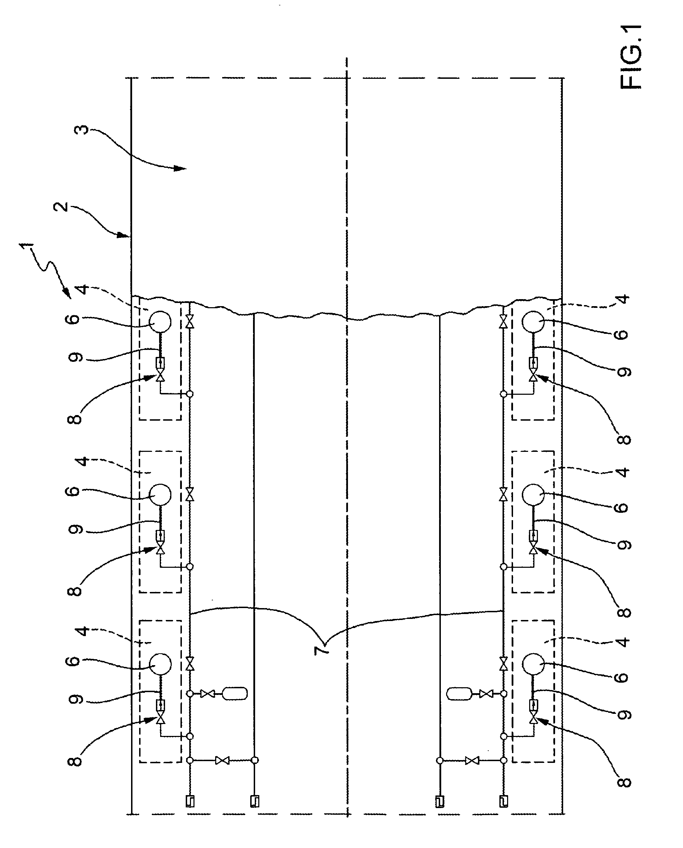

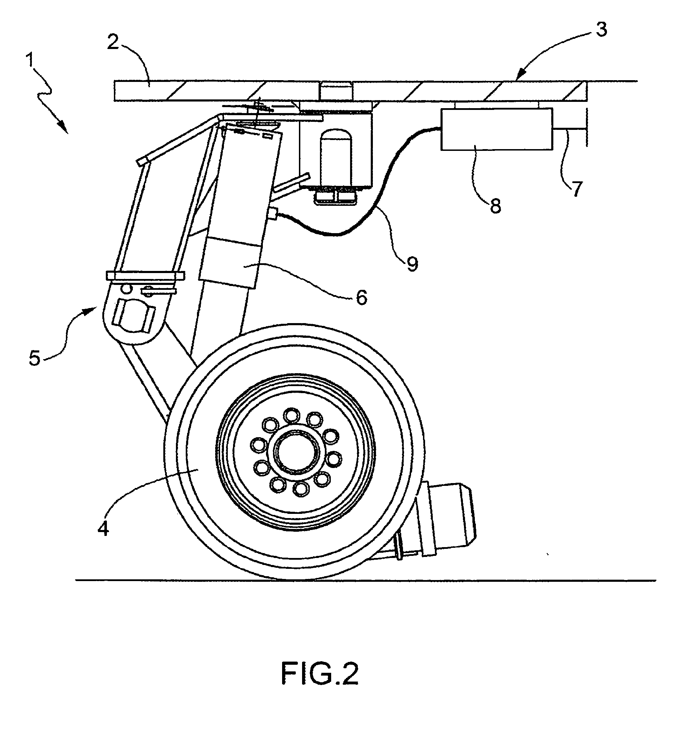

Number 1 in Figure 1 indicates as a whole a tyred-wheel trailer comprising a frame 2 defining a load bed 3; and a number of wheels 4, each connected to frame 2 by a respective hydraulic suspension 5 (Figure 2).

Hydraulic suspension 5 comprises a hydraulic cylinder 6 connected to a pressurized fluid feed pipe 7 with the interposition of a cutoff valve assembly 8, and a hose 9 connecting valve assembly 8 to hydraulic cylinder 6 (Figure 2).

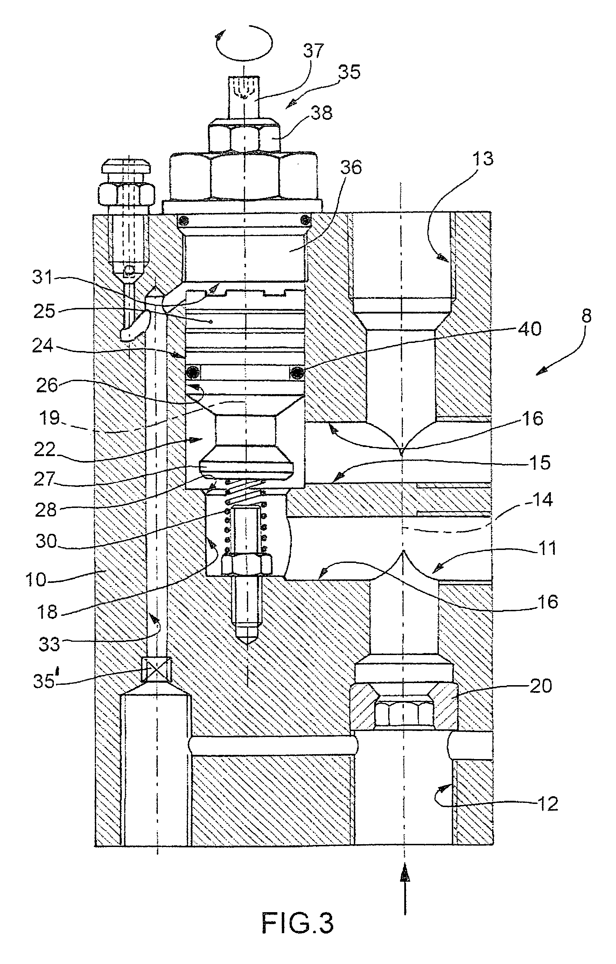

With reference to Figure 3, each valve assembly 8 is designed to control operating fluid flow to relative cylinder 6, and to cut off flow to cylinder 6 in the event of failure of hose pipe 9, or when the fluid pressure in pipe 7 and hose 9 exceeds a set pressure value.

In the example shown, valve assembly 8 comprises a body 10, in which is formed a contoured conduit 11 comprising a U-shaped intermediate portion 15; and two straight end portions 12, 13 extending along an axis 14 and connected to feed pipe 7 and hose 9 respectively. Intermediate portion 15 in turn comprises two lateral portions 16; and a central portion 18 extending along an axis 19 parallel to and at a transverse distance from axis 14.

As shown in Figure 3, a circular-section, calibrated choke 20, with a diameter conveniently adjustable between eight and sixteen millimetres, is located along portion 12, and central portion 18 is associated with an adjustable timing device 22.

Device 22 provides for adjusting - from outside body 10, i.e. when valve assembly 8 is already fitted to trailer 1 and connected to feed pipe 7 and relative cylinder 6, or when setting or using trailer 1 - the instant in which operating fluid flow through central portion 18, and therefore to cylinder 6, is cut off, as described in detail below.

In the example shown, device 22 comprises a shutter 24, which extends coaxially with axis 19 to close central portion 18 and gradually cut off operating fluid flow to relative cylinder 6. Shutter 24 in turn comprises a head 25 that slides both ways inside a conduit 26 formed, coaxially with axis 19, inside body 10 and communicating on one side with central portion 18, and on the other side with portion 13 via relative portion 16; and an end pad 27 which tapers towards its free end and rests against a complementary annular shoulder 28, which has a flow section substantially equal to that of calibrated choke 20, and extends inside central portion 18 so the operating fluid flows through it. Annular shoulder 28 is fitted through with a thrust spring 30 that exerts axial thrust in opposition to that exerted by a quantity of control fluid contained inside a variable-volume chamber 31.

Chamber 31 is connected to pipe 7 by a conduit 33, which comes out inside end portion 12, between calibrated choke 20 and pipe 7, and which has a further circular-section calibrated choke 35 with a much smaller flow section than calibrated choke 20 and a diameter of conveniently 0.4 mm.

Chamber 31 is formed inside conduit 26 and is bounded axially by head 25 of shutter 24 on one side, and by a closing and adjusting device 35 on the other.

In the Figure 3 example, closing and adjusting device 35 comprises a cap 36, which screws inside a threaded end portion of conduit 26, and is fitted through with an externally threaded axial rod 37. Rod 37 engages a nut screw 38 integral with cap 36, and has one end resting on head 25, and the opposite end projecting outwards of cap 36 and body 10. Manual rotation of threaded rod 37 from the outside in one direction or the other determines the size of chamber 31, the axial position of shutter 24 along conduit 26 and axis 19, the axial position of pad 27 with respect to shoulder 28, and therefore the flow section of the operating fluid to cylinder 6.

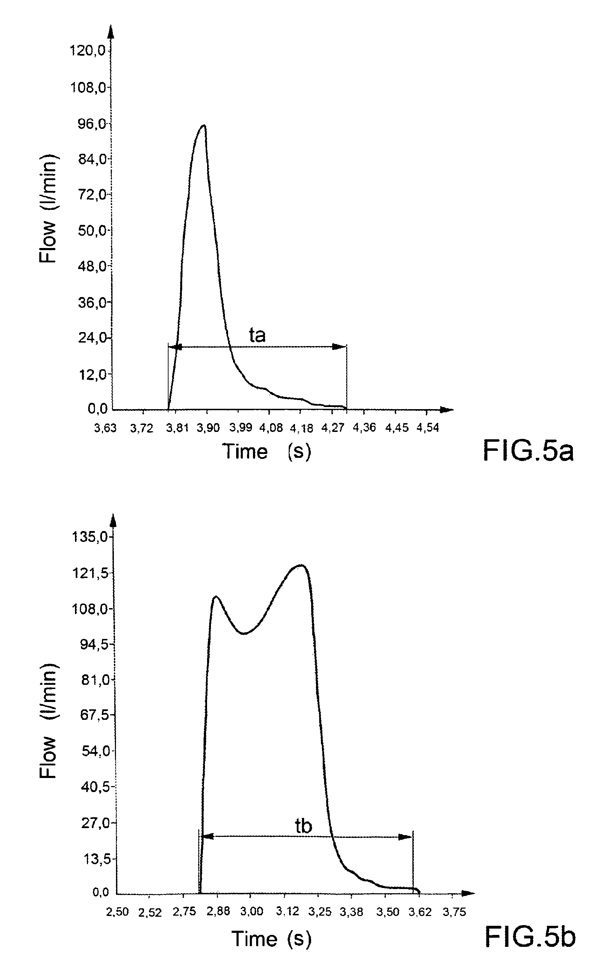

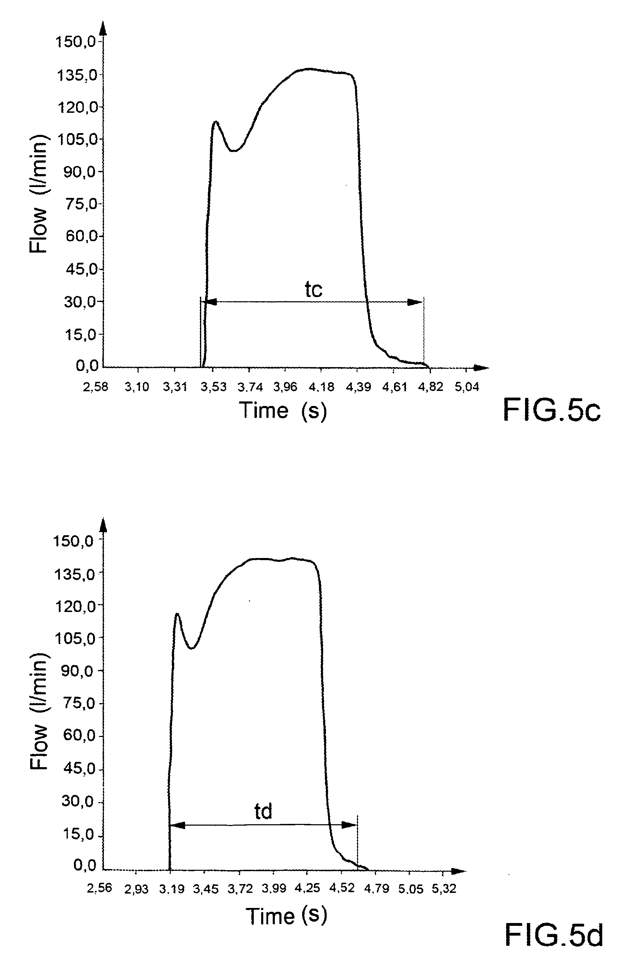

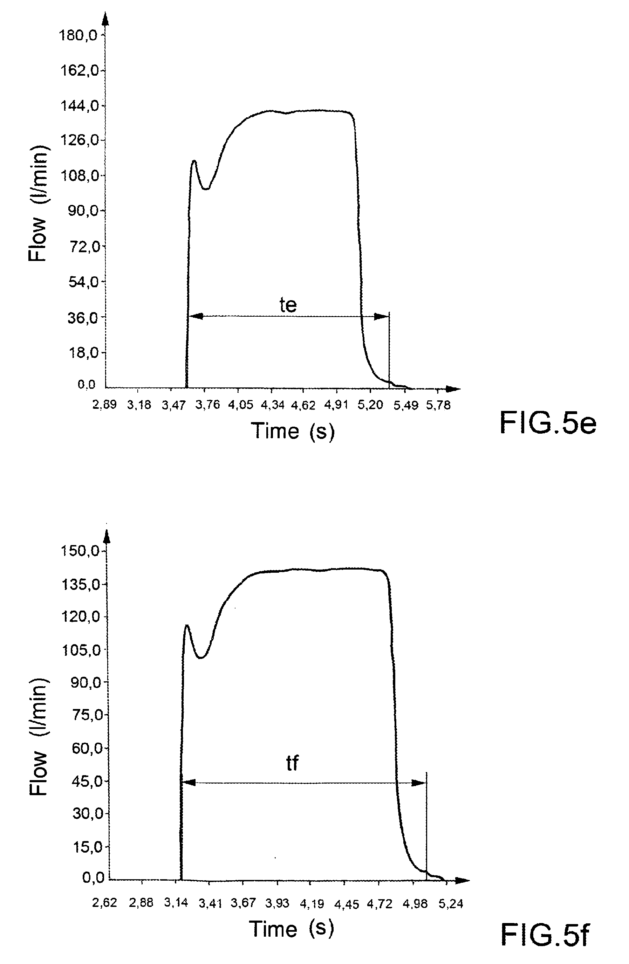

With reference, for the sake of simplicity, to one cylinder and the relative valve assembly, the size of calibrated choke 20 and annular shoulder 28, and the rigidity of spring 30 selected at the assembly stage determine a set, threshold, or intervention flow of valve assembly 8. As long as actual flow along contoured conduit 15 remains below the set flow, valve assembly 8 remains in a rest condition. But the instant actual flow along contoured conduit 15 exceeds the set flow, due to an external event, such as driving over a speed bump or failure of hose 9, valve assembly 8 begins regulating flow, and remains in a regulating condition until it reaches a closed position, i.e. cutting off cylinder 6, at an instant delayed with respect to the instant it began regulating flow. The time lapse between the two instants depends on the volume of control fluid in chamber 31, and therefore on the volume of chamber 31. This is confirmed in the Figure 5a-5f flow-time graphs. More specifically, Figure 5a shows the flow-time graph of the fluid to cylinder 6 starting with rod 37 screwed right down, i.e. with shutter 24 positioned close to shoulder 28 so that chamber 31 is of maximum volume, and assuming failure of hose 9,. At first, flow increases abruptly; and as soon as the instantaneous flow exceeds the set flow of valve assembly 8, this begins regulating. The operating fluid flows to cylinder 6 through calibrated choke 20. Inside pipe 7 and upstream from calibrated choke 35', a change in pressure occurs, which, by means of calibrated choke 35', produces an opposing force in chamber 31, which overcomes the force of spring 30, so that shutter 24 starts moving down towards shoulder 28. As a result, flow reaches a balance condition, while still remaining above the set flow; and, as soon as pad 27 comes to rests on shoulder 28, calibrated choke 20 is excluded and flow to cylinder 6 is cut off. The time lapse between valve assembly 8 intervening and closing is indicated ta in Figure 5a. By unscrewing threaded rod 37 and setting it to different axial positions, the flow-time pattern of the fluid to cylinder 6 varies differently, as shown in Figures 5b-5f, in which tb-tf indicate the time lapses between the valve assembly commencing regulation and closing. In particular, the graphs show how reducing the volume of chamber 31 increases the delay time between the instant the valve assembly commences regulation and the instant it closes.

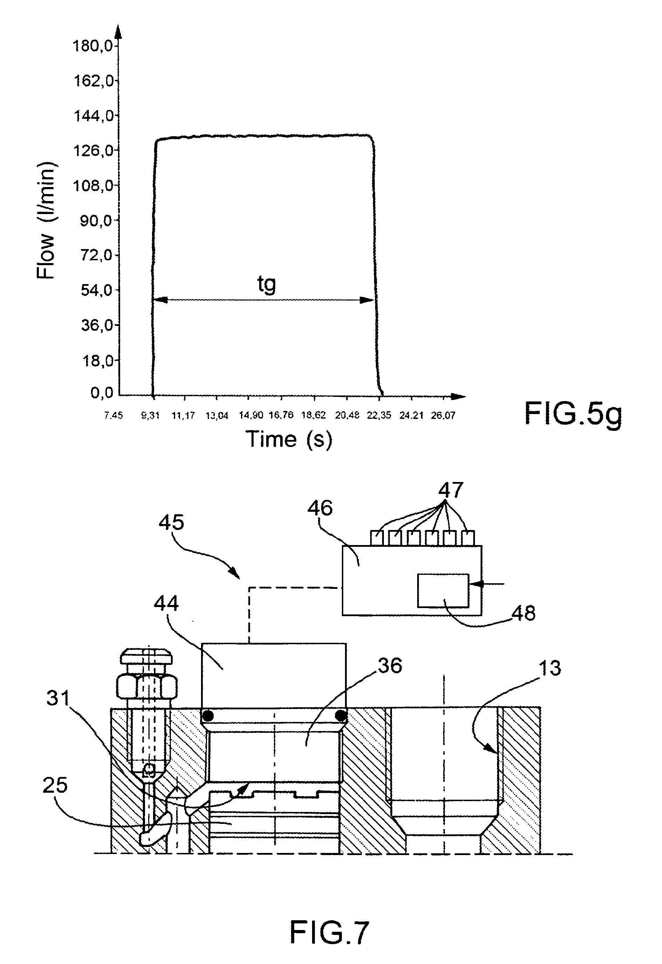

In addition to adjusting the rod, the delay time is also increased (Figure 5g) by providing, between head 25 and conduit 26, a brake ring 40, which provides for greatly increasing delay time, as shown by tg in the Figure 5g graph, which is obtained with rod 37 in the same position as in the Figure 5d graph.

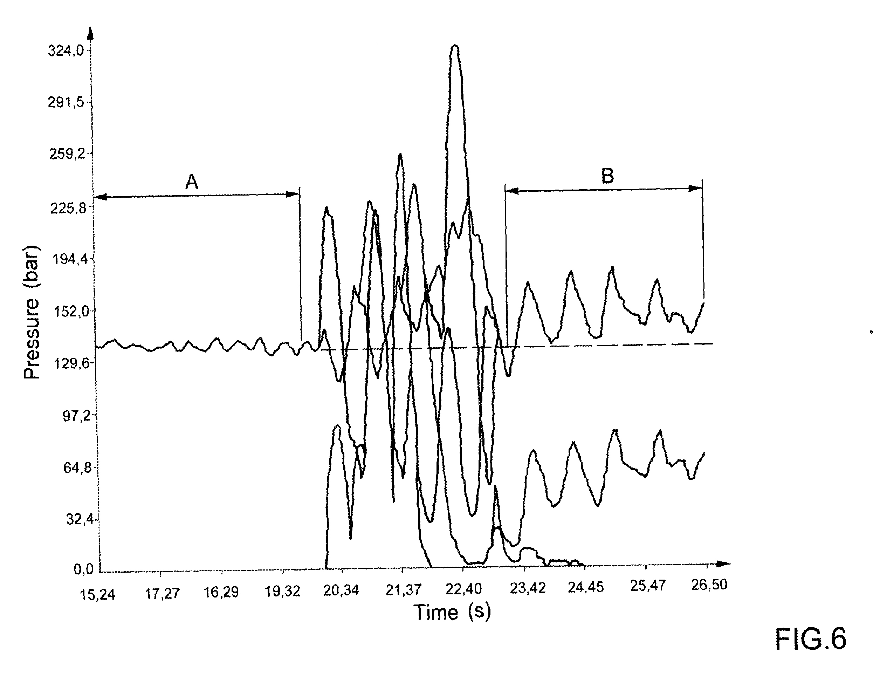

Adjusting the delay time not only prevents pressure peaks in the feed pipe and non-isolated suspension cylinders, but also, and above all, prevents severe permanent overloading of the suspensions not affected by closure of the valve assembly, as shown in the Figure 6 graph, in which the pressures in the time periods indicated A and B are roughly comparable or at any rate differ only slightly, unlike the corresponding time periods A and B in the known solution graph in Figure 4.

In the Figure 7 variation, the closing and adjusting device 35 is replaced with a device 45, which comprises an electric or servocontrolled linear actuator 44; and a unit 46 (shown schematically) for controlling linear actuator 45. Unit 46 comprises a number of selectors 47 which can be operated, e.g. by the driver of the trailer, to move shutter 24 manually into respective given axial positions, and so set different delay times. Alternatively or in parallel, unit 46 comprises a block 48 for periodically or continually receiving signals proportional to the stress state and/or position of suspensions 5; and a setting block which moves shutter 24 automatically, in response to the signals received, to set the best delay times.

Regardless of how the delay time is set, closing shutter 24 in the opposite direction to the flow direction of the fluid to cylinder 6 provides for achieving a valve assembly which, as compared with known solutions in which the shutter closes in the fluid flow direction, is practically unaffected by variations in flow, so even major variations in flow have practically no effect on the set delay times.

Finally, in valve assembly 8 described, the set flow is determined solely by a diaphragm and therefore unrelated to the travel of shutter 24.

## Claims

1. A method of controlling a hydraulic suspension (5) comprising at least one hydraulic cylinder (6) connected to a feed pipe (7) the method comprising the steps of feeding a flow of operating fluid to said hydraulic cylinder (6) through a cutoff valve assembly (8), and setting said valve assembly (8) so as to activate said valve assembly (8) at a first instant, in which flow to the hydraulic cylinder (6) exceeds a set or threshold flow of said valve assembly (8), and so that the valve assembly (8) reaches a closed position or a position cutting off said hydraulic cylinder (6) from said feed pipe (7) at a second instant delayed with respect to said first instant; the method being **characterized by** comprising the further step of adjusting the time between said first and second instant by acting from the outside and/or during operation of said valve assembly (8) as a function of stress on said hydraulic suspension (5).

2. A method as claimed in Claim 1, **characterized in that** the time between said first and second instant is adjusted by adjusting a quantity of control fluid of said valve assembly (8) drawn from said feed pipe (7).

3. A method as claimed in Claim 2, **characterized in that** the time between said first and second instant is adjusted by adjusting the volume of a variable-volume chamber (31), containing said control fluid, of said valve assembly (8).

4. A method as claimed in Claim 3, **characterized in that** the time between said first and second instant is adjusted by feeding the operating fluid to said hydraulic cylinder (6) through a first calibrated choke (20), and feeding said control fluid to said variable-volume chamber (31) through a second calibrated choke (35') having a smaller flow section than said first calibrated choke(20).

5. A method as claimed in any one of the foregoing Claims, **characterized in that** the time between said first and second instant is adjusted by mechanically adjusting, from outside said valve assembly (8), the axial position of a shutter (24) with respect to a flow section through which the operating fluid flows to said hydraulic cylinder (6).

6. A method as claimed in any one of the foregoing Claims, **characterized in that** the valve assembly (8) is moved into its closed position or its position cutting off said hydraulic cylinder, by moving a shutter (24) in the opposite direction to the flow direction of said operating fluid to said hydraulic cylinder (6).

7. A cutoff valve assembly (8) for controlling a hydraulic suspension (5) comprising a hydraulic cylinder (6) connected to a feed pipe (7) for feeding a pressurized operating fluid, the valve assembly (8) being interposed between the feed pipe (7) and said hydraulic cylinder (6) to cut off operating fluid flow to said hydraulic cylinder (6) and comprising setting means (20, 28, 30) for setting a set or threshold flow, and for defining a first instant in which to activate said valve assembly (8) and in which flow to the hydraulic cylinder (6) exceeds said set flow; and hydraulic timing means (22) for moving said valve assembly into a closed position or a position cutting said hydraulic cylinder off from said feed pilpe (7) at a second instant delayed with respect to said first instant; the valve assembly being **characterized in that** said hydraulic timing means (22) comprise adjusting means (35) that can be operated from the outside and/or during operation of the valve assembly to adjust the time between said first and second instant as a function of stress on said hydraulic suspension (5).

8. An assembly as claimed in Claim 7, **characterized in that** said hydraulic timing means (22) comprise a variable-volume chamber (31) containing a control fluid drawn from said feed pipe (7).

9. An assembly as claimed in Claim 8, **characterized in that** said setting means and said hydraulic timing means comprise a shared shutter (24) partly defining said variable-volume chamber (31); actuating means (37, 38), operated from the outside, being provided to move said shutter (24) to and from an annular shoulder (28) through which the operating fluid flows to said hydraulic cylinder (6).

10. An assembly as claimed in Claim 9, **characterized by** comprising a first calibrated choke (20) through which the operating fluid flows to said hydraulic cylinder (6), and a second calibrated choke (35') interposed between said variable-volume chamber (31) and a point at which said control fluid is drawn from said feed pipe (7); said second calibrated choke (35') having a smaller flow section than said first calibrated choke (20).

11. An assembly as claimed in Claim 9 or 10, **characterized in that** said actuating means comprise a screw-nut screw assembly (37, 38) having a screw (37) accessible manually from the outside when the valve assembly (8) is connected hydraulically to said hydraulic cylinder (6) and said feed pipe (7) and which acts on said shutter (24).

12. An assembly as claimed in Claim 9 or 10, **characterized in that** said actuating means comprise an electric actuator (44) which acts on said shutter (24); and an electronic control unit (46) for controlling said electric actuator (44), said unit (46) sending a control signal to said electric actuator (44) in response to a signal corresponding to a stress condition of said hydraulic suspension (5).

13. An assembly as claimed in any one of Claims 9 to 12, **characterized by** also comprising braking means (40) associated with said shutter (24).

## Patentansprüche

1. Verfahren zum Steuern einer hydraulischen Aufhängung (5), die wenigstens einen Hydraulikzylinder (6) aufweist, der mit einem Zufuhrrohr (7) verbunden ist, wobei das Verfahren die Schritte des Zuführen einer Strömung von Arbeitsfluid zu dem Hydraulikzylinder (6) durch eine Trennventilanordnung (8) und des Einstellens der Ventilanordnung (8) in der Weise, dass die Ventilanordnung (8) zu einem ersten Zeitpunkt aktiviert wirt, zu dem die Strömung zu dem Hydraulikzylinder (6) eine festgelegte Durchflussmenge oder Schwellendurchflussmenge der Ventilanordnung (8) übersteigt, und in der Weise, dass die Ventilanordnung (8) eine geschlossene Stellung oder eine den Hydraulikzylinder (6) von dem Zufuhrrohr (7) trennende Stellung zu seinem zweite Zeitpunkt erreicht, der gegenüber dem ersten Zeitpunkt verzögert ist, umfasst; wobei das Verfahren **gekennzeichnet ist durch** den weiteren Schritt des Einstellens der Zeit zwischen dem ersten und dem zweiten Zeitpunkt **durch** Einwirken von rußen und/oder während des Betriebes der Ventilanordnung (8) als Punktion der Beanspruchung der hydraulischen Aufhängung (5).

2. Verfahren nach Anspruch 1, **dadurch gekennzeichnet, dass** die Zeit wischen dem ersten und dem zweiten Zeitpunkt durch Einstellen einer Menge von Steuerfluid der Ventilanordnung (8), die aus dem Zufuhrrohr (7) gesaugt wir, eingestellt wird.

3. Verfahren nach Anspruch 2, **dadurch gekennzeichnet, dass** die Zeit zwischen dem ersten und dem zweiten Zeitpunkt durch Einstellen des Volumens einer das Steuerfluid enthaltenden Kammer (31) mit variablem Volumen der Ventilanordnung (8) eingestellt wird.

4. Verfahren nach Anspruch 3, **dadurch gekennzeichnet, dass** die Zeit wischen dem ersten und dem zweiten Zeitpunkt durch Zuführen des Arbeitsfluids zu dem Hydraulikzylinder (6) durch eine erste kalibrierte Drossel (20) und durch Zuführen des Steuerfluids zu der Kammer (31) mit variablem Volumen durch eine weite kalibrierte Drossel (35'), die einen kleineren Strömungsquerschnitt als die erste kalibrierte Drossel (20) besitzt, eingestellt wird.

5. Verfahren nach einem der vorhergehenden Ansprüche, **dadurch gekennzeichnet, dass** die Zeit zwischen dem ersten und dem zweien Zeitpunkt durch mechanisches Einstellen von außerhalb der Ventilanordnung (8) der axialen Stellung eines Verschlusses (24) in Bezug auf einen Strömungsquerschnitt, durch den das Arbeitsfluid zu dem Hydraulikzylinder (6) strömt, eingestellt wird.

6. Verfahren nach einem der vorhergehenden Ansprüche, **dadurch gekennzeichnet, dass** die Ventilanordnung (8) in ihre geschlossene Stellung oder in ihre den Hydraulikzylinder trennende Stellung durch Bewegen eines Verschlusses (24) in die zu der Strömungsrichtung des Arbeitsfluids zu dem Hydraulikzylinder (6) entgegengesetzte Wichtung bewegt wird.

7. Trennventilanordnung (8) zum Steuern einher hydraulischen Aufhängung (5), die einen Hydraulikzylinder (6) umfasst, die mit einem Zufuhrrohr (7) zum Zuführten eines mit Druck beaufschlagten Arbeitsfluids verbunden ist, wobei die Ventilanordnung (8) zwischen das Zufuhrrohr (7) und den Hydraulikzylinder (6) eingefügt ist, um die Arbeitsfluidströmung zu dem Hydraulikzylinder (6) zu unterbrechen, und Einstellmittel (20, 28, 30) umfasst, um eine Menge oder eine Schwellenströmung einzustellen und um einen ersten Zeitpunkt, zu dem die Ventilanordnung (8) aktiviert werden soll und zu dem die Strömung zu dem Hydraulikzylinder (6) die eingestellte Strömung übersteigt, zu definieren; und Hydraulikzeitvorgabemittel (22) umfasst, um die Ventilanordnung in eine geschlossene Stellung oder in eine den Hydraulikzylinder von dem Zufuhrrohr (7) trennende Stellung zu einem zweiten Zeitpunkt zu bewegen, der gegenüber dem ersten Zeitpunkt verzögert ist; wobei die Ventilanordnung **dadurch gekennzeichnet ist, dass** die Hydraulikzeitvorgabemittel (22) Einstellmittel (35) umfassen, die von außerhalb und/oder während des Betriebes der Ventilanordnung betätigt werden können, um die Zeit wischen dem ersten und dem zweiten Zeitpunkt als eine Punktion der Beanspruchung der hydraulischen Aufhängung (5) einzustellen.

8. Unordnung nach Anspruch 7, **dadurch gekennzeichnet, dass** die hydraulischen Zeitvorgabemittel (22) eine Kammer (31) mit variablem Volumen umfassen, die ein Steuerfluid enthält, das aus dem Zufuhrrohr (7) gesaugt wird.

9. Anordnung nach Anspruch 8, **dadurch gekennzeichnet, dass** die Einstellmittel und die hydraulischen Zeitvorgabemittel einen gemeinsam genutzten Verschluss (24), der zum Teil die Kammer (3) mit variablem Volumen definiert, Betätigungsmittel (37, 38), die von außerhalb betätigt werden und vorgesehen sind, um den Verschluß (24) zu und von einer ringförmigen Schulter (28) zu bewegen, durch die das Arbeitsfluid zu dem Hydraulikzylinder (6) strömt, umfassen.

10. Unordnung nach Anspruch 9, **gekennzeichnet durch** eine erste kalibrierte Drossel (20), **durch** die das Arbeitsfluid zu dem Hydraulikzylinder (6) strömt, und eine zweite kalibrierte Drossel (35'), die zwischen der Kammer zu mit variablem Volumen und seinem Punkt, an dem das Steuerfluid von dem Zufuhrrohr (7) gesaugt wird, eingefügt ist; wobei die zweite kalibrierte Drossel (35') einen kleineren Strömungsquerschnitt besitzt als die erste kalibrierte Drossel (20).

11. Unordnung nach Anspruch 9 oder 10, **dadurch gekennzeichnet, dass** die Betätigungsmittel eine Schrauben/Mutter-Gewindeanordnung (37, 38) umfassen, die eine Schraube (37) besitz, auf die von außerhalb manuell zugegriffen werden kann, wenn die Ventilanordnung (8) mit dem Hydraulikzylinder (6) und mit dem Zufuhrrohr (7) hydraulisch verbunden ist, und die auf den Verschluss (24) einwirkt.

12. Unordnung nach Anspruch 9 oder 10, **dadurch gekennzeichnet, dass** die Betätigungsmittel einen elektrischen Aktor (44) umfassen, der auf den Verschluss (24) einwirkt, und eine elektronische Steuereinheit (46) umfassen, um den elektrischen Aktor (44) zu steuern, wobei die Einheit (46) in Realtion auf ein Signal, das einem Beanspruchungszustand der hydraulischen Aufhängung (5) entspricht, ein Steuersignal zu dem elektrischen Aktor (44) sendet.

13. Unordnung nach einem der Anspruche 9 bis 12, **gekennzeichnet durch** Bremsmittel (40), die dem Verschluß (24) zugeordnet sind.

## Revendications

1. Procédé de commande d'une suspension hydraulique (5) comprenant au moins un cylindre hydraulique (6) relié à un tuyau d'alimentation (7), le procédé comprenant les étapes consistant à distribuer un écoulement de fluide de travail dans ledit cylindre hydraulique (6) par l'intermédiaire d'un ensemble vanne d'isolement (8) et à régler ledit ensemble vanne d'isolement (8) de manière à actionner ledit ensemble vanne d'isolement (8) à un premier instant, auquel l'écoulement jusqu'au cylindre hydraulique (6) excède un écoulement seuil ou écoulement prédéfini dudit ensemble vanne (8), et de manière que l'ensemble vanne (8) atteigne une position fermée ou une position isolant ledit cylindre hydraulique (6) dudit tuyau d'alimentation (7) à un second instant retardé par rapport audit premier instant ; le procédé étant **caractérisé en ce qu'**il comprend l'étape supplémentaire de réglage de la durée entre ledit premier instant et ledit second instant en agissant depuis l'extérieur et/ou durant le fonctionnement dudit ensemble vanne (8) en fonction de la contrainte sur ladite suspension hydraulique (5).

2. Procédé selon la revendication 1, **caractérisé en ce que** la durée entre ledit premier instant et ledit second instant est réglée en ajustant une quantité de fluide de commande dudit ensemble vanne (8) prélevée dudit tuyau d'alimentation (7).

3. Procédé selon la revendication 2, **caractérisé en ce que** la durée entre ledit premier instant et ledit second instant est réglée en ajustant le volume d'une chambre à volume variable (31) contenant ledit fluide de commande, dudit ensemble vanne (8).

4. Procédé selon la revendication 3, **caractérisé en ce que** la durée entre ledit premier instant et ledit second instant est réglée en distribuant le fluide de travail dans ledit cylindre hydraulique (6) par l'intermédiaire d'un premier étrangleur calibré (20) et en distribuant ledit fluide de commande dans ladite chambre à volume variable (31) par l'intermédiaire d'un second étrangleur calibré (35') ayant une plus petite section d'écoulement que ledit premier étrangleur calibré (20).

5. Procédé selon l'une quelconque des revendications précédentes, **caractérisé en ce que** la durée entre ledit premier instant et ledit second instant est réglée en ajustant mécaniquement, depuis l'extérieur dudit ensemble vanne (8), la position axiale d'un obturateur (24) par rapport à une section d'écoulement par laquelle s'écoule le fluide de travail jusqu'au dit cylindre hydraulique (6).

6. Procédé selon l'une quelconque des revendications précédentes, **caractérisé en ce que** l'ensemble vanne (8) est déplacé jusque dans sa position fermée ou sa position isolant ledit cylindre hydraulique, en déplaçant un obturateur (24) dans la direction opposée à la direction d'écoulement dudit fluide de travail jusqu'au dit cylindre hydraulique (6).

7. Ensemble vanne d'isolement (8) destinée à commander une suspension hydraulique (5) comprenant un cylindre hydraulique (6) raccordé à un tuyau d'alimentation (7) pour distribuer un fluide de travail sous pression, l'ensemble vanne (8) étant intercalé entre le tuyau d'alimentation (7) et ledit cylindre hydraulique (6) pour arrêter l'écoulement de fluide de travail jusqu'audit cylindre hydraulique (6) et comprenant un moyen de réglage (20, 28, 30) pour prédéfinir un écoulement seuil ou écoulement prédéfini, et pour définir un premier instant auquel actionner ledit ensemble vanne d'isolement (8) et auquel l'écoulement jusqu'au cylindre hydraulique (6) excède ledit écoulement prédéfini ; et un moyen de synchronisation hydraulique (22) pour déplacer ledit ensemble vanne jusque dans une position fermée ou une position isolant ledit cylindre hydraulique (6) dudit tuyau d'alimentation (7) à un second instant retardé par rapport audit premier instant ; l'ensemble vanne étant **caractérisé en ce que** ledit moyen de synchronisation hydraulique (22) comprend un moyen de réglage (35) qui peut être actionné depuis l'extérieur et/ou durant le fonctionnement de l'ensemble vanne pour régler la durée entre ledit premier instant et ledit second instant en fonction de la contrainte sur ladite suspension hydraulique (5).

8. Ensemble selon la revendication 7, **caractérisé en ce que** ledit moyen de synchronisation hydraulique (22) comprend une chambre à volume variable (31) contenant un fluide de commande prélevé dudit tuyau d'alimentation (7).

9. Ensemble selon la revendication 8, **caractérisé en ce que** ledit moyen de réglage et ledit moyen de synchronisation hydraulique comprennent un obturateur commun (24) délimitant, en partie, ladite chambre à volume variable (31) ; un moyen d'actionnement (37, 38), actionné depuis l'extérieur, servant à déplacer ledit obturateur (24) jusqu'à, et depuis, un épaulement annulaire (28) par lequel s'écoule le fluide de travail jusqu'au dit cylindre hydraulique (6).

10. Ensemble selon la revendication 9, **caractérisé en ce qu'**il comprend un premier étrangleur calibré (20) par lequel s'écoule le fluide de travail jusqu'au dit cylindre hydraulique (6) et un second étrangleur calibré (35') intercalé entre ladite chambre à volume variable (31) et un emplacement auquel ledit fluide de travail est prélevé dudit tuyau d'alimentation (7) ; ledit second étrangleur calibré (35') ayant une plus petite section d'écoulement que ledit premier étrangleur calibré (20).

11. Ensemble selon la revendication 9 ou 10, **caractérisé en ce que** ledit moyen d'actionnement comprend un ensemble vis/écrou de vis (37, 38) comportant une vis (37) accessible manuellement depuis l'extérieur lorsque l'ensemble vanne (8) est raccordé hydrauliquement audit cylindre hydraulique (6) et audit tuyau d'alimentation (7) et qui agit sur ledit obturateur (24).

12. Ensemble selon la revendication 9 ou 10, **caractérisé en ce que** ledit moyen d'actionnement comprend un actionneur électrique (44) qui agit sur ledit obturateur (24), et un bloc de commande électronique (46) pour commander ledit actionneur électrique (44), ledit bloc (46) envoyant un signal de commande audit actionneur électrique (44) en réponse à un signal correspondant à un état de contrainte de ladite suspension hydraulique (5).

13. Ensemble selon l'une quelconque des revendications 9 à 12, **caractérisé en ce qu'**il comprend également un moyen de freinage (40) associé audit obturateur (24).
